# FASCICULE DE BREVET EUROPEEN

(11) **EP 4 022 495 B1**
(45) Date de publication et mention de la délivrance du brevet: **29.04.2026**
(21) Numéro de dépôt: 20761248.2
(22) Date de dépôt: 27.08.2020
(51) Int. Cl.: G06V 20/10, G06V 20/52

(54) **PROCÉDÉ D'AIDE À LA DÉTECTION D'ÉLÉMENTS, DISPOSITIF ET PLATEFORME ASSOCIÉS**
VERFAHREN ZUR UNTERSTÜTZUNG DER DETEKTION VON ELEMENTEN, ZUGEHÖRIGE VORRICHTUNG UND PLATTFORM
METHOD FOR ASSISTING IN THE DETECTION OF ELEMENTS, ASSOCIATED DEVICE AND PLATFORM

(30) Priorité: 27.08.2019 FR 1909431
(43) Date de publication de la demande: 06.07.2022
(73) Titulaire: THALES, 92400 Courbevoie (FR)
(72) Inventeur: LE MEUR, Alain, 78990 ELANCOURT (FR); BECHE, Arnaud, 78990 ELANCOURT (FR); HENAFF, Gilles, 78990 ELANCOURT (FR); SEGUINEAU DE PREVAL, Benoît, 78990 ELANCOURT (FR)
(74) Mandataire: Lavoix
(86) Numéro de dépôt international: PCT/EP2020/073945
(87) Numéro de publication internationale: WO 2021/037963

(56) Documents cités:
- US-A1- 2019 005 353
- US-B1- 9 449 258
- US-B1- 9 501 684

## Description

La présente invention concerne un procédé d'aide à la détection d'éléments dans un environnement. La présente invention concerne également un dispositif associé d'aide à la détection, ainsi qu'une plateforme comprenant un tel dispositif.

Dans le domaine militaire, les équipages de véhicules de combat sont exposés à de nombreuses menaces. De telles menaces proviennent notamment de combattants débarqués, de véhicules terrestres ou aériens et de drones terrestres ou aériens.

Afin d'identifier de telles menaces, certaines missions de reconnaissance consistent à aller au plus près de l'ennemi pour déceler son dispositif, notamment le type d'engins de combat mis en œuvre, et déterminer précisément le volume et les unités d'appartenance de l'ennemi. Tout l'enjeu consiste à voir sans être vu, et transmettre un maximum de renseignements tactiques au poste de commandement.

Néanmoins, les menaces sont plus ou moins visibles, suivant le niveau de camouflage que peut apporter l'environnement, ce dernier pouvant être urbain, rural, montagneux ou encore forestier.

En outre, les véhicules blindés confèrent à l'équipage du véhicule un champ de vision qui peut être très réduit.

De plus, la charge de travail, ainsi que le niveau de fatigue du personnel sont susceptibles d'entraîner une perte de vigilance vis-à-vis de l'environnement extérieur du véhicule.

Tout ceci concourt à ce que les équipages soient exposés à des menaces qu'ils n'ont pas systématiquement vues et anticipées.

Il est connu du document US 9 449 258 B un procédé mettant en œuvre deux caméras différentes pour acquérir des images d'un environnement avec des champs de vision différents. Néanmoins, ce procédé vise seulement à faire correspondre des objets imagés par les deux caméras et ne vise pas à améliorer la détection d'éléments, et notamment la classification d'éléments.

Il existe donc un besoin pour un procédé d'aide à la détection qui permette une meilleure détection des éléments d'un environnement, et notamment des menaces dans un contexte militaire.

A cet effet, l'invention a pour objet un procédé d'aide à la détection d'éléments fixes et mobiles dans un environnement, le procédé comprenant à chaque instant les étapes de :
- acquisition d'une première image, la première image étant une image panoramique de l'environnement, la première image ayant une première résolution et imageant l'environnement selon un premier champ de vision,
- détection, le cas échéant, d'éléments fixes et mobiles imagés sur la première image par un classifieur entraîné en fonction d'une base de données d'images d'éléments et par un détecteur de mouvements utilisant des premières images acquises aux instants précédents,
- classification, par le classifieur, de chaque élément détecté pour obtenir une classification initiale de l'élément,
- acquisition d'au moins une deuxième image, la deuxième image imageant au moins l'un des éléments détectés, la deuxième image ayant une deuxième résolution et imageant l'environnement selon un deuxième champ de vision, la deuxième résolution étant supérieure à la première résolution, le deuxième champ de vision étant plus restreint que le premier champ de vision, et
- réévaluation, par le classifieur, pour chaque élément détecté imagé sur la ou une deuxième image, de la classification de l'élément en fonction de la deuxième image pour obtenir une classification réévaluée de l'élément.

Selon d'autres aspects avantageux de l'invention, le procédé d'aide à la détection comprend une ou plusieurs des caractéristiques suivantes, prises isolément ou suivant toutes les combinaisons techniquement possibles :
- chaque classification est associée à une probabilité représentative d'un niveau de confiance en la classification,
- pour chaque élément détecté lorsque la classification réévaluée est différente de la classification initiale et que la probabilité de classification associée à la classification réévaluée est supérieure ou égale à un seuil prédéterminé, le procédé comprend une étape d'enregistrement de l'image de l'élément détecté issue de la première image et/ou de la deuxième image, ainsi que de la classification réévaluée de l'élément pour une mise à jour ultérieure de la base de données par ajout de la ou des images de l'élément détecté et entraînement du classifieur avec la base de données mise à jour,
- pour chaque élément détecté, lorsque la probabilité de classification associée à la dernière classification de l'élément est strictement inférieure à un seuil prédéterminé, le procédé comprend une étape de vérification, par un opérateur ou par un outil de classification additionnel, de la dernière classification de l'élément, l'étape de vérification comprenant, le cas échéant, la correction de la dernière classification de l'élément,
- pour chaque élément détecté, le procédé comprend, en outre, une étape de mise à jour de la base de données par ajout de l'image de l'élément détecté issue de la première image et/ou de la deuxième image, ainsi que de la classification vérifiée de l'élément, et avantageusement d'entraînement du classifieur avec la base de données mise à jour,
- chaque image comprend une signature, l'étape de mise à jour comprenant la vérification de la signature de l'image et la non-prise en compte de l'image lorsque la signature de l'image n'est pas conforme à une signature prédéterminée,
- chaque image comprend des pixels, le procédé comprenant une étape d'affichage d'au moins une image parmi la première image et la ou les deuxièmes images, les pixels détectés par le classifieur comme correspondants à ou aux éléments détectés sur l'image affichée étant mis en évidence sur l'image affichée,
- les éléments détectés sont choisis dans la liste constituée de : un humain, un animal, un système d'arme, un véhicule terrestre, un véhicule maritime et un véhicule aérien.

L'invention concerne, en outre, un dispositif d'aide à la détection d'éléments fixes et mobiles dans un environnement, le dispositif comprenant :
- un système d'acquisition d'images configuré pour mettre en œuvre les étapes d'acquisition d'une première image et d'acquisition d'au moins une deuxième image du procédé selon l'une quelconque des revendications tel que décrit précédemment.
- un calculateur en interaction avec un classifieur entraîné en fonction d'une base de données d'images d'éléments et un détecteur de mouvements, le calculateur étant configuré pour mettre en œuvre les étapes de détection, de classification et de réévaluation du procédé tel que décrit précédemment.

L'invention concerne aussi une plateforme, notamment une plateforme mobile telle qu'un véhicule, comprenant un dispositif tel que décrit précédemment.

L'invention a, également, pour objet un procédé d'aide à la détection d'éléments
dans un environnement, le procédé comprenant les étapes de :
- acquisition simultanée d'une première image et d'une deuxième image imageant une même portion de l'environnement, la première image étant une image dans une première bande spectrale, la deuxième image étant une image dans une deuxième bande spectrale, la deuxième bande spectrale étant différente de la première bande spectrale,
- détection, le cas échéant, d'éléments imagés dans la première image par un premier classifieur entraîné en fonction d'une première base de données d'images d'éléments dans la première bande spectrale,
- détection, le cas échéant, d'éléments imagés dans la deuxième image par un deuxième classifieur entraîné en fonction d'une deuxième base de données d'images d'éléments dans la deuxième bande spectrale,
- classification, pour chaque image, des éléments détectés par le classifieur correspondant,
- comparaison de la classification des éléments détectés obtenue pour la première image et pour la deuxième image, et
- lorsque la classification d'au moins l'un des éléments détectés est différente pour la première image et la deuxième image ou lorsqu'un élément a été détecté seulement pour l'une des deux images, mémorisation de la première et de la deuxième image et des classifications correspondantes pour une mise à jour ultérieure d'au moins l'une des bases de données, et un entraînement ultérieur du classifieur correspondant avec la base de données mise à jour.

Selon d'autres aspects avantageux de l'invention, le procédé d'aide à la détection comprend une ou plusieurs des caractéristiques suivantes, prises isolément ou suivant toutes les combinaisons techniquement possibles :
- l'une de la première bande spectrale et de la deuxième bande spectrale est comprise entre 380 nanomètres et 780 nanomètres et l'autre de la première bande spectrale et de la deuxième bande spectrale est comprise entre 780 nanomètres et 3 micromètres ou entre 3 micromètres et 5 micromètres ou entre 8 micromètres et 12 micromètres,
- le procédé comprend une étape de mise à jour d'au moins l'une des bases de données en fonction de la ou des images et des classifications correspondantes mémorisées,
- chaque classification est associée à une probabilité représentative d'un niveau de confiance en la classification, pour chaque élément détecté, lorsque la probabilité associée à la classification obtenue pour la première image est supérieure ou égale à un seuil prédéterminé et la probabilité associée à la classification obtenue pour la deuxième image est strictement inférieure au seuil prédéterminé, l'étape de mise à jour comprenant la mise à jour de la deuxième base de données par ajout de l'image de l'élément détecté issue de la deuxième image, ainsi que de la classification obtenue pour l'élément imagé sur la première image et l'entraînement du deuxième classifieur avec la deuxième base de données mise à jour,
- chaque classification est associée à une probabilité représentative d'un niveau de confiance en la classification, pour chaque élément détecté, lorsque la probabilité associée à la classification obtenue pour chacune de la première et de la deuxième image est inférieure à un seuil prédéterminé, l'étape de mise à jour comprenant la vérification, par un opérateur ou par un outil de classification additionnel, de la ou des classifications de l'élément détecté et, le cas échéant, la correction de la ou des classifications, l'étape de mise à jour comprenant la mise à jour d'au moins une base de données par ajout de l'image de l'élément détecté issue de l'image acquise dans la bande spectrale de la base de données, ainsi que de la classification vérifiée de l'élément, et l'entraînement du classifieur correspondant avec la base de données mise à jour,
- la première et la deuxième image sont des images panoramiques de l'environnement ayant une même première résolution et un même premier champ de vision, le procédé comprenant, en outre, les étapes de :
   - acquisition d'au moins une troisième image pour au moins l'un des éléments détectés sur l'une de la première ou de la deuxième image, la troisième image étant une image dans la première ou la deuxième bande spectrale, la troisième image ayant une deuxième résolution et un deuxième champ de vision, la deuxième résolution étant supérieure à la première résolution, le deuxième champ de vision étant plus restreint que le premier champ de vision,
   - réévaluation, par le classifieur correspondant, pour chaque élément détecté imagé sur la ou une troisième image, de la classification de l'élément en fonction de la troisième image pour obtenir une classification réévaluée de l'élément,
      chaque classification étant associée à une probabilité représentative d'un niveau de confiance en la classification,
      pour chaque élément détecté, lorsque la probabilité associée à la classification réévaluée est supérieure ou égale à un seuil prédéterminé et que la probabilité associée à la classification obtenue à partir de la première et/ou la deuxième image est strictement inférieure au seuil prédéterminé, l'étape de mémorisation comprenant la mémorisation de ladite première et/ou deuxième image, de la troisième image et des classifications correspondantes pour une mise à jour ultérieure de la base de données dans la même bande spectrale que la troisième image, et l'entraînement du classifieur correspondant avec la base de données mise à jour.
- chaque image comprend une signature, l'étape de mise à jour comprenant la vérification de la signature de chaque image acquise et la non-prise en compte de l'image lorsque la signature de l'image n'est pas conforme à une signature prédéterminée,
- les éléments détectés sont choisis dans la liste constituée de : un humain, un animal, un système d'arme, un véhicule terrestre, un véhicule maritime et un véhicule aérien.

L'invention concerne, en outre, un dispositif d'aide à la détection d'éléments dans un environnement, le dispositif comprenant :
- un système d'acquisition d'images configuré pour mettre en œuvre l'étape d'acquisition du procédé tel que décrit précédemment, et
- un calculateur en interaction avec un premier classifieur entraîné en fonction d'une première base de données d'images d'éléments et avec un deuxième classifieur entraîné en fonction d'une deuxième base de données d'images d'éléments, le calculateur étant configuré pour mettre en œuvre les étapes de détection, de classification, de comparaison, et de mémorisation du procédé tel que décrit précédemment.

L'invention concerne aussi une plateforme, notamment une plateforme mobile telle qu'un véhicule, comprenant un dispositif tel que décrit précédemment.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1] figure 1, une représentation schématique d'une plateforme comprenant un dispositif d'aide à la détection d'éléments,
- [Fig 2] figure 2, un organigramme d'un exemple de mise en œuvre d'un procédé d'aide à la détection d'éléments, et
- [Fig 3] figure 3, un organigramme d'un autre exemple de mise en œuvre d'un procédé d'aide à la détection d'éléments.

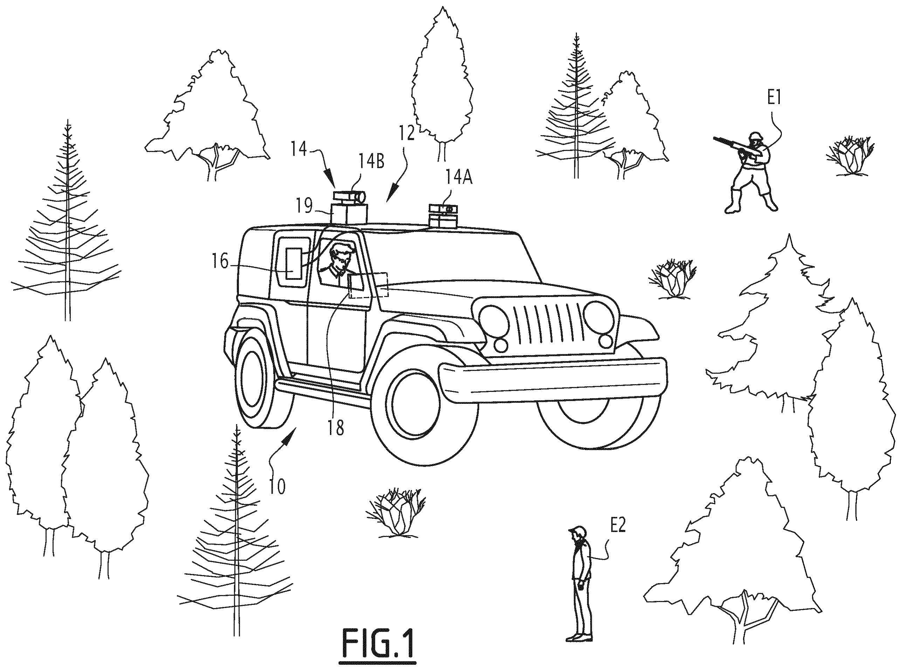

Une plateforme 10 est représentée sur la figure 1. Dans cet exemple, la plateforme 10 est un véhicule terrestre, en particulier un véhicule de type tout-terrain. Un tel véhicule est, par exemple, commandé par un opérateur à l'intérieur du véhicule. En variante, un tel véhicule est, par exemple, télécommandé à partir d'un autre véhicule.

Avantageusement, la plateforme 10 est un véhicule de type militaire, tel qu'un char d'assaut. Un tel véhicule militaire est notamment adapté pour comporter une pluralité d'armes et pour protéger le ou les opérateurs installés à l'intérieur du véhicule.

En variante, la plateforme 10 est tout autre plateforme mobile, tel qu'un véhicule aérien (avion, hélicoptère, drone ou satellite) ou un véhicule maritime (bâtiment naval).

Encore en variante, la plateforme 10 est une plateforme fixe, telle qu'une tourelle ou tour de contrôle.

La plateforme 10 comprend un dispositif 12 d'aide à la détection d'éléments E dans un environnement. Le dispositif 12 est propre à aider un opérateur pour la détection des éléments E dans l'environnement.

De préférence, les éléments E sont choisis dans la liste constituée de : un humain, un animal, un système d'arme, un véhicule terrestre, un véhicule maritime et un véhicule aérien.

Plus précisément, pour les éléments E de type humains, il est par exemple fait la distinction entre un humain non armé, un humain armé avec une arme légère et un humain armé avec une arme lourde.

Pour les éléments E de type véhicule terrestre, il est par exemple fait la distinction entre un véhicule civil non armé (voiture, camion, moto), un véhicule civil armé (véhicule tout terrain avec tourelle) et un véhicule militaire (char, camion logistique, véhicule de transport de troupes, véhicule de reconnaissance), voire un véhicule militaire de type précis (char Leclerc, char Challenger, char T72).

Pour les éléments E de type véhicule aérien, il est par exemple fait la distinction entre un élément volant défini de type avion, un élément volant défini de type hélicoptère, un élément volant défini de type drone et un élément volant défini de type drone armé. En outre, il est également fait la distinction entre un élément volant défini de type oiseau (animal) et un véhicule aérien.

Pour les éléments E de type véhicule maritime, il est par exemple fait la distinction entre un navire civil non armé, un navire civil armé, un navire militaire de type précis et un sous-marin.

Les éléments E à détecter sont aussi bien fixes (par exemple : véhicule à l'arrêt) que mobiles (par exemple : humain ou véhicule en mouvement).

Dans un contexte militaire, l'élément E indique la présence d'une menace potentielle pour les opérateurs de la plateforme 10 que le dispositif 12 permet de classifier.

Dans l'exemple illustré par la figure 1, deux éléments E sont représentés : un premier élément E1 de type humain non armé et un deuxième élément E2 de type humain armé avec une arme légère. Dans cet exemple, l'environnement est de type forestier.

Le dispositif 12 d'aide à la détection comporte un système d'acquisition d'images 14, un calculateur 16 et un dispositif d'affichage 18.

Le système d'acquisition d'images 14 est propre à capter des images d'une partie de l'environnement de la plate-forme 10.

Le système d'acquisition d'images 14 est propre à capter un ensemble d'images à une cadence faible de manière à obtenir une série d'images fixes comme avec un appareil photo ou à une cadence plus importante de manière à acquérir assez d'images pour former un flux vidéo.

Par exemple, le système d'acquisition d'images 14 est propre à fournir un flux vidéo, par exemple, en format vidéo HD-SDI. L'acronyme HD renvoie à la haute définition. La HD-SDI (High Definition - Serial digital interface) ou interface numérique série haute définition est un protocole de transport ou de diffusion des différents formats de vidéo numériques. Le protocole HD-SDI est défini par la norme ANSI/SMPTE 292M. Le protocole HD-SDI est particulièrement adapté pour un traitement en temps réel d'images.

En variante, le système d'acquisition d'images 14 est propre à fournir un flux vidéo dans un autre standard, par exemple, un flux vidéo au format CoaxPress ou un flux vidéo au format Ethernet compressé par exemple au standard H264 ou H265.

Avantageusement, le système d'acquisition d'images 14 est adapté pour la prise d'images en couleurs pour la vision de jour et/ou pour la prise d'images infra-rouge pour la vision de nuit et/ou pour la prise d'images permettant un décamouflage de nuit comme de jour.

Dans un premier mode de réalisation, le système d'acquisition d'images 14
comprend au moins deux entités 14A et 14B illustrées sur la figure 1 :
- une première entité 14A comprenant au moins un capteur de type panoramique propre à acquérir des images panoramiques de l'environnement. Les images acquises par ce capteur ont une première résolution et imagent l'environnement selon un premier champ de vision. Dans l'exemple illustré par la figure 1, la première entité 14A est fixe.
- une deuxième entité 14B comprenant au moins un capteur de type non-panoramique propre à acquérir des images non-panoramiques de l'environnement. Les images acquises par ce capteur ont une deuxième résolution et imagent l'environnement selon un deuxième champ de vision. La deuxième résolution est supérieure à la première résolution. Le deuxième champ de vision est plus restreint que le premier champ de vision. Avantageusement, la deuxième entité 14B est orientable (par exemple en site et en gisement) de sorte à régler l'orientation du capteur. Par exemple, comme illustré par la figure 1, la deuxième entité 14B est montée sur un organe 19, tel qu'un tourelleau, permettant d'orienter le capteur. En variante ou en complément, la deuxième entité 14B est une caméra pan tilt zoom.

Un capteur est dit de type panoramique dès lors que le capteur est propre à fournir des images de l'environnement sur 360°. L'élévation est alors, par exemple, comprise entre 75° et -15°. Un tel capteur panoramique est, par exemple, formé par une seule caméra, telle qu'une caméra fisheye. En variante, un tel capteur panoramique est formé par un ensemble de caméras.

Dans le premier mode de réalisation, le capteur de type panoramique et le capteur de type non-panoramique sont propres à acquérir des images de l'environnement dans au moins une bande spectrale, par exemple, la bande visible. La bande visible est une bande spectrale comprise entre 380 nanomètres (nm) et 780 nm.

Dans un deuxième mode de réalisation, le système d'acquisition 14 comprend au moins deux capteurs :
- un capteur propre à acquérir des images d'une portion de l'environnement dans une première bande spectrale.
- un capteur propre à acquérir des images d'une même portion de l'environnement dans une deuxième bande spectrale, la deuxième bande spectrale étant différente de la première bande spectrale.

Ainsi, selon ce deuxième mode de réalisation, les deux capteurs de bandes spectrales différentes du même système d'acquisition 14 sont propres à acquérir des images au même moment, selon la même ligne de visée et selon le même champ de vision. Les images acquises par les deux capteurs embrassent donc rigoureusement les mêmes objets suivant le même champ de vision.

Par exemple, l'une de la première bande spectrale et de la deuxième bande spectrale est comprise entre 380 nm et 780 nm (visible) et l'autre de la première bande spectrale et de la deuxième bande spectrale est comprise entre 780 nm et 3 micromètres (µm) (proche infrarouge) et/ou entre 3 µm et 5 µm (infrarouge bande II) et/ou entre 8 µm et 12 µm (infrarouge bande III). Dans le deuxième mode de réalisation, les deux capteurs sont tous les deux du même type (afin d'acquérir le même champ de vision), c'est à dire soit panoramique, soit non-panoramique.

Par exemple, lorsque les deux capteurs sont tous les deux de type panoramique, les deux capteurs sont, par exemple, intégrés dans une même entité qui est, par exemple, identique à la première entité 14A du premier mode de réalisation. Lorsque les deux capteurs sont tous les deux de type non-panoramique, les deux capteurs sont, par exemple, intégrés dans une même entité qui est, par exemple, identique à la deuxième entité 14B du premier mode de réalisation.

Dans un troisième mode de réalisation, le système d'acquision 14 comprend les deux capteurs du premier mode de réalisation, ainsi que l'un au moins des composants suivants :
- un capteur panoramique additionnel propre à acquérir des images panoramiques de la même portion d'environnement et selon le même champ de vision que le capteur panoramique mais dans une bande spectrale différente, et/ou
- un capteur non-panoramique additionnel propre à acquérir des images non-panoramiques de la même portion d'environnement et selon le même champ de vision que le capteur non-panoramique mais dans une bande spectrale différente.

L'une des bandes spectrales est, par exemple, comprise entre 380 nm et 780 nm et l'autre des bandes spectrales est, par exemple, comprise entre 780 nm et 3 µm et/ou entre 3 µm et 5 µm et/ou entre 8 µm et 12 µm.

Par exemple, le capteur panoramique additionnel est intégré dans la même première entité 14A que le capteur panoramique du premier mode de réalisation. Le capteur non-panoramique additionnel est, par exemple, intégré dans la même deuxième entité 14B que le capteur non-panoramique du deuxième mode de réalisation.

Le calculateur 16 est notamment configuré pour faire fonctionner un classifieur et, le cas échéant, un outil de détection de mouvements et pour collecter des images en provenance du système d'acquision 14 afin de pouvoir alimenter une base de données images qui servira, hors mission, à perfectionner le classifieur.

Le calculateur 16 est, par exemple, un processeur. Le calculateur 16 comprend, par exemple, une unité de traitement de données, des mémoires, un lecteur de support d'informations et une interface homme/machine, telle qu'un clavier ou un afficheur.

Le calculateur 16 est, par exemple, en interaction avec un produit-programme d'ordinateur qui comporte un support d'informations.

Le support d'informations est un support lisible par le calculateur 16, usuellement par l'unité de traitement de données du calculateur 16. Le support lisible d'informations est un médium adapté à mémoriser des instructions électroniques et capable d'être couplé à un bus d'un système informatique. A titre d'exemple, le support lisible d'informations est une disquette ou disque souple (de la dénomination anglaise *floppy disk*), un disque optique, un CD-ROM, un disque magnéto-optique, une mémoire ROM, une mémoire RAM, une mémoire EPROM, une mémoire EEPROM, une carte magnétique ou une carte optique. Sur le support d'informations est mémorisé le produit-programme d'ordinateur comprenant des instructions de programme.

Avantageusement, au moins un classifieur et, le cas échéant, au moins un outil de détection de mouvements sont mémorisés sur le support d'informations. En variante, le classifieur et l'outil de détection de mouvements sont mémorisés dans une mémoire du calculateur 16.

Le classifieur, aussi appelé outil de classification dans la suite de la description, est configuré pour détecter et classifier des éléments E. La classification consiste à affecter une classe à chaque élément E détectée. Les classes possibles sont, par exemple, des classes générales telles que par exemple : la classe « humain », la classe « animal », la classe « système d'arme », la classe « véhicule terrestre », la classe « véhicule maritime » et la classe « véhicule aérien ». Avantageusement, les classes sont des classes plus précises, par exemple, conformes aux distinctions entre les éléments qui ont été décrites précédemment.

Avantageusement, le classifieur a été entraîné au préalable, hors mission, en fonction d'une base de données d'images comprenant des images des éléments E à détecter. Le classifieur comprend notamment au moins un algorithme de détection d'éléments E et un algorithme de classification d'éléments E. Le classifieur est, par exemple, un réseau de neurones ayant été préalablement « entraîné » via la base de données images comprenant des images des éléments E à détecter. Avantageusement, la phase d'apprentissage ou « d'entraînement » n'est pas réalisée dans le véhicule, mais hors mission.

Dans un mode de réalisation particulier (deuxième et troisième modes de réalisation notamment), deux classifieurs sont utilisés : un premier classifieur entraîné au préalable, hors mission, en fonction d'une première base de données d'images dans une première bande spectrale et un deuxième classifieur entraîné au préalable, hors mission, en fonction d'une deuxième base de données d'images dans une deuxième bande spectrale. L'une des bandes spectrales est, par exemple, comprise entre 380 nm et 780 nm et l'autre des bandes spectrales est, par exemple, comprise entre 780 nm et 3 µm et/ou entre 3 µm et 5 µm et/ou entre 8 µm et 12 µm.

L'outil de détection de mouvements, aussi appelé détecteur de mouvements dans la suite de la description, est configuré pour détecter des éléments E mobiles en fonction d'images acquises aux instants précédents. L'outil de détection de mouvements comprend notamment un algorithme de détection de mouvements. L'outil de détection de mouvements est, par exemple, un algorithme basé sur la méthode de flot optique.
ou chaque base de données d'images comprend notamment des images d'éléments E associées à une classification, les éléments E étant par exemple imagés dans un environnement ou un contexte particulier, ou encore sous un angle de vue particulier. Les classifications mémorisées dans la base de données ont été, par exemple, obtenus via un opérateur ou un autre outil de classification, notamment lors du dépouillement post-mission d'une mission de reconnaissance antérieure.

Le programme d'ordinateur est chargeable sur l'unité de traitement de données et est adapté pour entraîner la mise en œuvre de procédés d'aide à la détection d'éléments E lorsque le programme d'ordinateur est mis en œuvre sur l'unité de traitement du calculateur 16 comme cela sera décrit dans la suite de la description.

En variante, au moins une partie du calculateur 16 est intégrée à l'un ou plusieurs des capteurs du système d'acquisition 14 pour former ce que l'on appelle des capteurs intelligents (en anglais « smart sensors »).

En variante, au moins une partie du calculateur 16 est déportée de la plateforme 10, les transmissions de données se faisant par exemple sans fil, si la puissance de calcul du processeur intégré à la plateforme est trop réduite.

Le dispositif d'affichage 18 est, selon l'exemple de la figure 1, un écran propre à afficher des images à l'opérateur, par exemple les images en provenance du système d'acquision 14 ou les mêmes images après traitement par le calculateur 16.

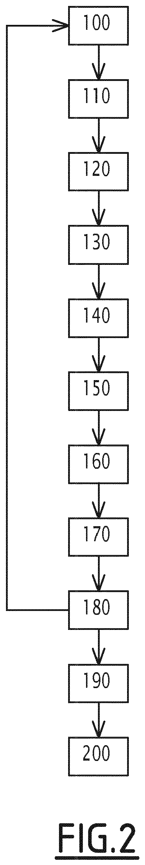

Un premier mode de fonctionnement du dispositif 12 va maintenant être décrit en référence à la mise en œuvre par le calculateur 16 d'un procédé d'aide à la détection d'éléments E dans un environnement. Une telle mise en œuvre est illustrée par l'organigramme de la figure 2. En outre, dans ce premier mode de fonctionnement, le système d'acquisition 14 du dispositif 12 est conforme au premier mode de réalisation décrit précédemment.

Le procédé comprend une étape 100 d'acquisition d'une première image IM1. La première image IM1 est acquise en temps réel, c'est-à-dire à la fréquence d'acquisition image (par exemple 100 Hertz (Hz) ou 50 Hz ou 25 Hz ou 12,5 Hz), le temps d'acquisition de l'image aussi nommé temps d'intégration étant de l'ordre de quelques millisecondes (par exemple de 100 microsecondes à 10 millisecondes suivant la luminosité de la scène et la sensibilité du détecteur).

La première image IM1 est une image panoramique de l'environnement. La première image IM1 comprend un ensemble de pixels. La première image IM1 a une première résolution et image l'environnement selon un premier champ de vision. La résolution d'une image est définie comme étant le nombre de pixels par pouce dans l'image (1 pouce = 2,54 centimètres). Le champ de vision d'un système d'acquisition d'images, aussi appelé champ visuel ou angle de vue, correspond à la zone totale de l'espace que le système d'acquisition perçoit lorsque le système fixe un point.

Pour simplifier, il est supposé qu'à cette étape d'acquisition 100, une seule première image IM1 est acquise. Le raisonnement est évidemment le même si un flux vidéo comprenant un ensemble d'images est considéré.

L'étape d'acquisition 100 est, par exemple, mise en œuvre par le capteur panoramique du système d'acquisition 14.

Le procédé comprend une étape 110 de détection, le cas échéant, d'éléments E fixes et mobiles imagés sur la première image IM1 en utilisant l'outil de classification (algorithme de classification décrit précédemment et auquel à accès le calculateur 16) et en utilisant simultanément un outil de détection de mouvement exploitant des premières images acquises aux instants précédents. De telles images sont, par exemple, mémorisées temporairement ou de façon permanente dans une mémoire du calculateur 16. L'étape de détection 110 est mise en oeuvre en temps réel par le calculateur 16.

En particulier, le classifieur permet de détecter les éléments E bien définis (nombre de pixels suffisants) fixes ou mobiles. Le détecteur de mouvements permet de détecter les éléments E mobiles bien définis ou mal définis (nombre de pixels insuffisants). Les images acquises aux instants précédents permettent notamment la détection, par l'outil de détection de mouvements, d'éléments E mobiles qui ne sont pas suffisamment résolus (nombre de pixels insuffisant) par le capteur panoramique pour être reconnus à l'aide de l'outil de classification, mais qui pourront l'être lors de l'étape de réévaluation décrite dans ce qui suit, à partir d'une nouvelle acquisition d'images par un capteur non-panoramique plus résolu.

Les premières images acquises sont, par exemple, mémorisées temporairement ou de façon permanente dans une mémoire du calculateur 16.

L'étape de détection 110 comprend, par exemple, la réalisation d'un traitement d'images par l'outil de classification pour détecter les éléments E imagés sur la première image IM1. Un tel traitement est, par exemple, réalisé préférentiellement à la fréquence image (par exemple 100 Hertz (Hz) ou 50 Hz ou 25 Hz ou 12,5 Hz) ou suivant les capacités du calculateur 16 à 1 Hz ou au moins une fois toutes les 3 secondes.

Le procédé comprend une étape 120 de classification de chaque élément détecté E pour obtenir une classification initiale de l'élément E, cette classification dénotant au moins une suspicion d'intérêt pour l'élément E. L'étape de classification 120 est mise en oeuvre en temps réel par le calculateur 16.

De préférence, chaque classification est associée à une probabilité représentative d'un niveau de confiance en la classification. La probabilité de classification est, déterminée par l'outil de classification.

Avantageusement, l'étape de classification 120 permet de catégoriser les éléments détectés E dans au moins les catégories suivantes :
Première catégorie : élément détecté E fixe ou mobile, bien résolu, classifié avec un bon niveau de probabilité par l'outil de classification,
- Deuxième catégorie : élément détecté E fixe, moyennement ou mal résolu, classifié avec un niveau médiocre par l'outil de classification (par exemple probabilité comprise entre 85% et 70%) ou classifié comme étant un élément dangereux, demandant une confirmation par un capteur plus précis dans l'étape de réévaluation 150,
- Troisième catégorie : élément déctecté E mobile, moyennement ou mal résolu ou très mal résolu (déterminé par un seul pixel), demandant une classification spécifique par pistage (suivi de mouvement) et quand l'élément est suffisamment résolu (quelques pixels) demandant une confirmation par un capteur plus résolu lors de l'étape de réévaluation 150.

L'étape de classification 120 dépend notamment de la résolution des images des éléments E obtenue par le capteur panoramique lors de l'étape d'acquisition 100.

Avantageusement, dans le cas de la détection d'un élément E mobile moyennement résolu, mal résolu, voire très mal résolu, l'étape de classification 120 comprend la fourniture d'un vecteur comprenant la position de l'élément E dans l'image, sa vitesse, son accélération, ainsi que la vignette image de l'élément E. Le classifieur comprend alors une fonction spécifique utilisée pour classifier l'élément E mobile détecté en fonction de sa trajectoire. Par exemple, cet outil de classification vise à distinguer une trajectoire d'oiseau de celle d'un drone.

Le procédé comprend, optionnellement, une étape 130 d'affichage de la première image IM1. L'étape d'affichage 130 est, par exemple, mise en œuvre en temps réel par le dispositif d'affichage 18.

Avantageusement, les éléments E détectés sont mis en évidence par un symbole, classiquement un rectangle ou une ligne courbe fermée entourant au plus près l'élément E.

Avantageusement, sur demande de l'opérateur, les pixels correspondants à ou aux éléments détectés E sont mis en évidence sur l'image affichée, par exemple, par changement de couleur ou surbrillance. Cela permet à l'opérateur de vérifier que ce sont les pixels de l'élément E qui ont servi à la classification et non ceux du contexte.

En outre, la classification des éléments E est, par exemple, affichée sur l'image, ainsi qu'avantageusement la probabilité associée à la classification. Cela permet à l'opérateur de vérifier une classification associée à une probabilité non satisfaisante, typiquement inférieure à un seuil prédéterminé (par exemple inférieure à 80 %).

Eventuellement, l'étape d'affichage 130 comprend la mise à disposition de l'opérateur des contenus suivants :
- un modèle en trois dimensions (3D) de l'élément E notamment quand il s'agit d'un véhicule, avec possibilité de visualiser l'élément E sous différents angles, et/ou
- d'autres classes (par exemple de deux à cinq) vers lesquelles l'outil de classification a convergé avec une probabilité plus faible, ainsi que la probabilité de classification associée à de telles classes et, éventuellement, le modèle 3D de l'élément E, et/ou
- le cas échéant, des images de l'élément E acquises dans d'autres bandes spectrales.

Le procédé comprend, optionnellement, une étape 140 de mémorisation de l'image de l'élément E détecté issue de la première image IM1, ainsi que de la classification et éventuellement de la probabilité associée à la classification. Cela permet de vérifier ultérieurement la classification de l'élément E et éventuellement d'enrichir la base de données utilisée pour entraîner le classifieur. L'étape de mémorisation 140 est, par exemple, mise en œuvre en temps réel par une mémoire du calculateur 16.

Avantageusement, seuls les éléments E imagés dont la classification est associée à une probabilité inférieure à un seuil prédéterminé considérée comme faible (par exemple inférieure à 80%) sont sauvegardés (images et données de contexte associées à l'image), pour un post-traitement d'amélioration de l'apprentissage réalisé après la mission.

Le procédé comprend une étape 150 d'acquisition d'au moins une deuxième image IM2 d'au moins l'un des éléments E détectés lors de l'étape de détection 110. La deuxième image IM2 est, par exemple, acquise en temps réel par le capteur non-panoramique du système d'acquisition 14 après que le capteur non-panoramique ait été orienté préalablement en direction de l'élément E (par exemple au moyen de l'organe 19 de l'entité 14B).

La deuxième image IM2 a une deuxième résolution et image l'environnement selon un deuxième champ de vision. La deuxième résolution est supérieure à la première résolution. Le deuxième champ de vision est plus restreint que le premier champ de vision. De préférence, le deuxième champ de vision est contenu dans le premier champ de vision. La deuxième image IM2 est avantageusement sensiblement centré sur l'élément E détecté correspondant. En option, le capteur non-panoramique est également susceptible d'être orienté sur des éléments désignés par d'autres moyens que l'image panoramique IM1. Les autres moyens sont, par exemple, un Détecteur d'Alerte Laser (DAL), un Détecteur de Départ Missile (DDM), ou encore un détecteur acoustique de coup de feu. Dans ce cas, le capteur non-panoramique image une image IM2 qui n'a pas d'antécédent IM1 (c'est-à-dire à laquelle ne correspond aucune première image IM1).

La deuxième image IM2 est, par exemple, acquise automatiquement sans intervention de l'opérateur. Dans ce cas, une deuxième image IM2 est acquise pour chaque élément E détecté. Un algorithme de priorité peut être utilisé tenant compte de la dangerosité supposée de l'élément E (avec par exemple par ordre de priorité décroissante : alerte DDM, alerte DAL, alerte coup de feu, première classification via la première image IM1 d'un élément dangereux mais ayant eu une probabilité inférieure à 80% lors des étapes 110 et 120, élément mobile proche (composé de nombreux pixels) mais mal classifié dans les étapes 110 et 120, les animaux, hommes non armés et véhicules non armés étant mis en basse priorité).

En variante, la deuxième image IM2 est acquise de manière semi-automatique, l'opérateur validant les éléments E à acquérir. Pour certaines menaces, par exemple la Détection de Départ Missile ou Détection d'Alerte Laser le système pourra réagir automatiquement pour être plus rapide.

Encore en variante, la deuxième image IM2 est acquise par commande manuelle de l'opérateur. Dans ce cas, l'opérateur choisit l'un après l'autre les éléments E détectés à acquérir.

Le procédé comprend une étape 160 de réévaluation, pour chaque élément E détecté imagé sur la ou une deuxième image IM2, de la classification de l'élément E en fonction de la deuxième image IM2 et de la base de données d'images pour obtenir une classification réévaluée de l'élément E. L'étape de réévaluation 160 est, par exemple, mise en oeuvre en temps réel par le calculateur 16.

L'étape de réévaluation 160 comprend la classification de l'élément E imagé sur la deuxième image IM2 au moyen de l'outil de classification (avantageusement adapté aux images IM2), par exemple, de la même manière que lors de l'étape de classification 120. La classification obtenue à l'issue de cette nouvelle classification est appelée classification réévaluée. La classification réévaluée est ainsi identique ou différente de la classification initiale.

Avantageusement, la classification réévaluée obtenue est également associée à une probabilité de classification.

Optionnellement, l'étape de réévaluation 160 comprend l'alerte de l'opérateur lorsque la classification réévaluée est différente de la classification initiale.

Le procédé comprend optionnellement une étape 170 d'affichage de la deuxième image IM2. L'étape d'affichage 170 est, par exemple, mise en œuvre en temps réel par le dispositif d'affichage 18.

Avantageusement, les éléments E détectés sont mis en évidence par un symbole, classiquement un rectangle ou une ligne courbe fermée entourant au plus près l'élément E.

Avantageusement, sur demande de l'opérateur, les pixels correspondants à ou aux éléments E détectés sont mis en évidence sur l'image affichée, par exemple, par changement de couleur ou surbrillance. Cela permet à l'opérateur de vérifier que ce sont les pixels de l'élément E qui ont servi à la classification et non ceux du contexte.

En outre, la classification des éléments E est, par exemple, affichée sur l'image, ainsi qu'avantageusement la probabilité associée à la classification. Cela permet à l'opérateur de vérifier une classification associée à une probabilité non satisfaisante, typiquement inférieure à un seuil prédéterminé (par exemple inférieure à 80 %).

Avantageusement, la deuxième image IM2 est intégrée dans la première image IM1 lors de l'affichage conformément à la demande de brevet WO 2017/211672.

Eventuellement, l'étape d'affichage 170 comprend la mise à disposition de l'opérateur des contenus suivants :
- le modèle 3D de l'élément E notamment quand il s'agit d'un véhicule, avec possibilité de visualiser l'élément E sous différents angles, et/ou
- les autres classes (par exemple de deux à cinq) vers lesquelles l'outil de classification a convergé avec une probabilité plus faible, ainsi que la probabilité de classification associée à de telles classes et, éventuellement, le modèle 3D de l'élément E, et/ou
- le cas échéant, des images de l'élément E acquises dans d'autres bandes spectrales.

Le procédé comprend, optionnellement, une étape 180 de mémorisation de l'image de l'élément E détecté issue de la deuxième image IM2, ainsi que de la classification de l'élément E et de la probabilité associée à la classification. Cela permet de vérifier ultérieurement la classification de l'élément E et éventuellement d'enrichir la base de données utilisée pour entraîner le classifieur. L'étape de mémorisation 180 est, par exemple, mise en œuvre en temps réel par une mémoire du calculateur 16.

Avantageusement, seuls les éléments E imagés dont la classification est associée à une probabilité faible, typiquement inférieure à un seuil prédéterminé (par exemple inférieure à 80%) sont sauvegardés (images et données de contexte associées à l'image), pour un post-traitement d'amélioration de l'apprentissage réalisé après la mission.

Optionnellement, le procédé comprend une étape 190 de vérification de la classification d'au moins un élément E détecté.

Typiquement, l'étape de vérification 190 est mise en œuvre, pour chaque élément E détecté, lorsque la probabilité de classification associée à la dernière classification de l'élément E est strictement inférieure à un seuil prédéterminé (typiquement 80 %). La dernière classification de l'élément E désigne la classification réévaluée lorsque cette dernière existe et la classification initiale sinon. L'étape de vérification 190 comprend, le cas échéant, la correction de la dernière classification de l'élément E pour obtenir une classification corrigée de l'élément E.

L'étape de vérification 190 est, par exemple, mise en œuvre ultérieurement (hors mission) par un opérateur ou par un outil de classification additionnel. Dans ce cas, l'image de l'élément E détecté a été mémorisée au préalable, par exemple, lors d'une étape de mémorisation 140, 180.

En variante, l'étape de vérification 190 est mise en œuvre en temps réel par un opérateur lors de la mission. Dans ce cas, un nombre limité d'images modèle sont, par exemple, embarquées dans le véhicule pour vérification par l'opérateur.

Le procédé comprend optionnellement une étape 200 de mise à jour de la base de données ayant servi à entraîner le classifieur et d'entraînement du classifieur sur la base de données mise à jour en fonction des images et des classifications mémorisées lors des étapes de mémorisation 140, 180.

L'étape 200 est, par exemple, mise en œuvre ultérieurement (hors mission). En particulier, dans le contexte militaire, cette étape de mise à jour 200 est de préférence réalisée après la mission soit dans une base avancée, soit sur un site militaire arrière. Elle consiste à collecter l'ensemble des images classifiées par un dispositif 12 d'aide à la détection lors d'une mission ou d'un ensemble de missions, la classification ayant été éventuellement corrigée par l'équipage.

Lorsqu'une étape de vérification 190 a été mise en œuvre, l'étape de mise à jour 200 comprend, avantageusement, l'ajout, dans la base de données, de l'image de l'élément E détecté issue de la première image IM1 et/ou de la deuxième image IM2, ainsi que de la classification vérifiée de l'élément E. L'image ajoutée est, par exemple, une portion (vignette) de la première et/ou de la deuxième image IM2, ce qui permet de limiter le volume de l'image.

De préférence, pour chaque élément E détecté, lorsque la classification réévaluée est différente de la classification initiale et que la probabilité de classification associée à la classification réévaluée est supérieure ou égale à un seuil prédéterminé, l'étape de mise à jour 200 comprend l'ajout dans la base de données de l'image de l'élément E détecté issue de la première et/ou de la deuxième image IM2, ainsi que de la classification réévaluée de l'élément E. Dans ce cas, la classification réévaluée a avantageusement été vérifiée au préalable par un opérateur ou par un outil de classification externe.

Optionnellement, lorsqu'une image dans une autre bande spectrale a été obtenue simultanément à la première ou la deuxième image IM2, la classification de chaque élément E obtenue à partir de la première et/ou la deuxième image IM2 est reportée à l'image dans l'autre bande spectrale. L'étape 200 de mise à jour comprend alors l'ajout dans une base de données d'images dans l'autre bande spectrale, de l'image de l'élément E détecté issue de l'image dans l'autre bande spectrale, ainsi que de la classification reportée pour les éléments E de cette image.

Avantageusement, l'étape de mise à jour 200 comprend, en outre, une optimisation de l'outil de classification utilisé lors des étapes de détection, classification et réévaluation par entraînement de l'outil de classification avec la base de données mise à jour. Après cette optimisation, une nouvelle version de l'outil de classification pourra être déployée dans chaque plateforme 10, par exemple, en mémorisant la nouvelle version de l'outil dans une mémoire du calculateur 16 ou en mettant à jour le programme d'ordinateur utilisé.

En complément facultatif, chaque image acquise comprend une signature. La signature définit l'origine de l'image et garantit l'intégrité de l'image. L'étape de mise à jour 200 comprend alors la vérification de la signature de l'image considérée et la non-prise en compte de l'image lorsque la signature de l'image n'est pas conforme à une signature prédéterminée. La vérification de la signature de l'image s'effectue, par exemple, par un algorithme de hachage. Eventuellement, il est aussi vérifié que le capteur ayant acquis l'image appartient bien à une liste de capteurs actifs et valides.

Ainsi, le procédé d'aide à la détection permet la détection et la classification des éléments E d'un environnement que ces éléments E soient fixes ou mobiles. Un tel procédé est particulièrement adapté pour être mis en œuvre dans un véhicule militaire (blindé, de transport) dont les missions dans des zones dangereuses exigent une vigilance de tous les instants et dans toutes les directions.

Le procédé permet notamment de présenter et recueillir automatiquement une situation locale tactique autour du véhicule présentant en temps réel l'ensemble des menaces détectées et classifiées automatiquement par un outil de classification par apprentissage. De telles menaces sont susceptibles de survenir lors de missions de reconnaissance, mais également de transport ou d'attaque. Un tel procédé permet donc d'effectuer une veille automatique et vigilante de l'environnement.

Dans le cadre d'une mission de reconnaissance, un tel procédé permet de déterminer les unités adverses, notamment le nombre et le type de véhicules. Cela permet de donner une cartographie de la situation locale aux membres de l'équipage d'un véhicule et d'alerter de façon efficace ceux-ci en cas d'hypo-vigilance due à un niveau de fatigue élevé ou à une concentration importante sur une autre tâche.

L'affichage des éléments E détectés et classifiés sur un écran permet de présenter une situation locale tactique autour d'une plateforme, par exemple un véhicule, et notamment d'aider un opérateur à détecter une menace.

La classification des éléments E et l'association d'une probabilité de classification permet à l'opérateur de connaître le niveau de confiance donné par l'outil de classification automatique formé par apprentissage à partir d'une base de données d'images. Sur les niveaux de confiance incertains (par exemple un indice de confiance inférieur à 80%), l'opérateur ou plus généralement l'équipage du véhicule pourra confirmer ou infirmer la classification obtenue.

Les étapes de mémorisation 140, 180 et de mise à jour 200 permettent également de recueillir les données (images et données de contexte associées aux images) de nouvelles menaces ou de menaces « mal » classifiées du fait d'un contexte (camouflage, point de vue nouveau) dans le but de renforcer l'apprentissage de l'outil de classification au retour de la mission (apprentissage de nouvelle menaces et/ou amélioration de l'apprentissage de menaces connues mais ne bénéficiant pas encore d'une base de données images suffisante). Par exemple, si l'équipage du véhicule est confronté à un nouveau type de blindé non connu de l'outil de classification, il sauvegardera les informations utiles pour pouvoir réaliser un complément d'apprentissage au retour à la base.

Enfin, le procédé est particulièrement avantageux puisqu'il permet, du fait de l'acquisition d'images panoramiques, de détecter des menaces dans toutes les directions autour du véhicule. Par rapport à un équipage seul, le procédé permet de détecter de telles menaces le plus loin possible et le plus rapidement possible, pour permettre d'avoir un temps de réaction le plus long possible. Le procédé permet la détection de telles menaces malgré les camouflages de la menace qui empêchent soit sa détection, soit son identification précise et malgré les blindages entourant les personnels qui empêchent d'avoir une vision détaillée dans toutes les directions. En outre, un tel procédé est mis en œuvre indépendamment du niveau de vigilance variable de l'opérateur dû à son niveau de fatigue ou au fait qu'il soit déjà concentré sur une autre tâche. Un tel procédé permet donc une meilleure détection des éléments E d'un environnement, et notamment des menaces dans un contexte militaire.

L'homme du métier comprendra que l'ordre des étapes du procédé est donné à titre d'exemple et que les étapes peuvent être mises en œuvre dans un ordre différent. Par exemple, les étapes de mémorisation 140, 180 peuvent avoir lieu avant les étapes d'affichage 130, 170 respectives.

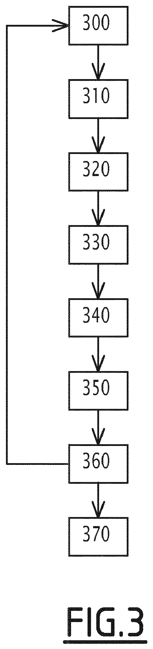

Un deuxième mode de fonctionnement du dispositif 12 va maintenant être décrit en référence à la mise en œuvre par le calculateur 16 d'un procédé d'aide à la détection d'éléments E dans un environnement. Une telle mise en œuvre est illustrée par l'organigramme de la figure 3. En outre, dans ce deuxième mode de fonctionnement, le système d'acquisition 14 du dispositif 12 est conforme au deuxième mode de réalisation décrit précédemment.

Dans ce deuxième mode de fonctionnement, les termes « première image » et « deuxième image » sont employés pour désigner des images spécifiques à ce mode de fonctionnement. De telles images sont donc différentes de celles décrites dans le premier mode de fonctionnement.

Le procédé comprend une étape 300 d'acquisition simultanée d'une première image IM1 et d'une deuxième image IM2 imageant une même portion de l'environnement. Par acquisition simultanée, il est entendu que les deux images sont acquises au même instant.

La première image IM1 est une image dans une première bande spectrale. La première image IM1 est acquise par le capteur du système d'acquisition 14 dans la première bande spectrale.

La deuxième image IM2 est une image dans une deuxième bande spectrale. La deuxième image IM2 est acquise par le capteur du système d'acquisition 14 dans la deuxième bande spectrale. Il est rappelé que la première bande spectrale et la deuxième bande spectrale sont différentes (par exemple visible et infrarouge bande III à V).

La première et la deuxième image IM2 imagent la même portion de l'environnement selon le même champ de vision.

Pour simplifier, il est supposé qu'à cette étape d'acquisition 300, une seule première image IM1 et une seule deuxième image IM2 sont acquises. Le raisonnement est évidemment le même si un flux vidéo comprenant un ensemble d'images est considéré.

L'étape d'acquisition 300 est, par exemple, mise en œuvre par les capteurs du système d'acquisition 14.

Le procédé comprend une étape 310 de détection, le cas échéant, d'éléments E imagés sur la première image IM1 en utilisant un premier outil de classification (algorithme de classification) qui aura réalisé préalablement son apprentissage en fonction d'une première base de données d'images dans la première bande spectrale. L'étape de détection 310 est mise en oeuvre par le calculateur 16.

Optionnellement, pour la détection d'éléments E mobiles, il est également utilisé lors de l'étape de détection 310 un outil de détection de mouvements exploitant des premières images acquises aux instants précédents. De telles images sont, par exemple, mémorisés temporairement ou de façon permanente dans une mémoire du calculateur 16.

L'étape de détection 310 comprend, par exemple, la réalisation d'un traitement d'images par un outil de classification pour détecter et classifier les éléments E imagés sur la première image IM1. Un tel traitement est, par exemple, réalisé au plus à la fréquence image (par exemple 50 Hertz (Hz) ou 25 Hz ou 12,5 Hz) ou préférentiellement à 1 Hz ou au moins une fois toutes les 3 secondes

Le procédé comprend une étape 320 de détection, le cas échéant, d'éléments E imagés sur la deuxième image IM2 en utilisant un deuxième outil de classification (algorithme de classification) qui aura réalisé préalablement son apprentissage en fonction d'une deuxième base de données d'images dans la deuxième bande spectrale. L'étape de détection 320 est mise en oeuvre par le calculateur 16.

Optionnellement, pour la détection d'éléments E mobiles, il est également utilisé, lors de l'étape de détection 310, un outil de détection de mouvements exploitant des deuxièmes images IM2 acquises aux instants précédents. De telles images sont, par exemple, mémorisés temporairement ou de façon permanente dans une mémoire du calculateur 16.

L'étape de détection 320 est, par exemple, identique à l'étape de détection 310 précédente en remplaçant le premier outil de classification par le deuxième outil de classification obtenu.

Le procédé comprend une étape 330 de classification, pour chaque image, des éléments E détectés par chaque outil de classification. L'étape de classification 330 est mise en oeuvre par le calculateur 16. L'étape de classification 330 est, par exemple, mise en oeuvre par les mêmes outils de classification que les étapes de détection 310 et 320 respectives. L'étape de classification 330 dépend notamment de la résolution des images des éléments E obtenue par les capteurs lors de l'étape d'acquisition 300.

Avantageusement, dans le cas de la détection d'un élément E mobile, l'étape de classification 330 comprend la fourniture d'un vecteur comprenant la position de l'élément E dans l'image, sa vitesse, son accélération, ainsi que la vignette image de l'élément E. L'outil de classification est alors configuré pour classifier l'élément E mobile détecté en fonction de sa trajectoire. Par exemple, l'outil de classification vise à distinguer une trajectoire d'oiseau de celle d'un drone.

De préférence, chaque classification est associée à une probabilité représentative d'un niveau de confiance en la classification. La probabilité de classification est, par exemple, déterminé par l'outil de classification correspondant.

Le procédé comprend une étape 340 de comparaison de la classification des éléments E détectés obtenue pour la première image IM1 et pour la deuxième image IM2.

L'étape de comparaison 340 permet de déterminer si pour un même élément E détecté, la classification obtenue dans la première bande spectrale (i.e. à partir de la première image IM1) est identique ou différente de celle obtenue dans la deuxième bande spectrale (i.e. à partir de la deuxième image IM2) et si un élément E n'a été détecté et classifié que dans une seule bande spectrale.

Le procédé comprend une étape 350 de mémorisation de la première et de la deuxième image et des classifications correspondantes au moins lorsque la classification d'au moins l'un des éléments détectés E est différente pour la première image IM1 et la deuxième image IM2 ou lorsqu'un élément E a été détecté seulement pour l'une des deux images. En variante, ces données sont systèmatiquement mémorisées.

Les données enregistrées sont destinées à être utilisées pour une mise à jour ultérieure d'au moins l'une des bases de données, et un entraînement ultérieur du classifieur correspondant avec la base de données mise à jour. Cela permet de vérifier ultérieurement la classification de l'élément E et éventuellement d'enrichir les bases de données respectives. L'étape de mémorisation 350 est, par exemple, mise en œuvre par une mémoire du calculateur 16.

Le procédé comprend, optionnellement, une étape 360 d'affichage d'au moins l'une de la première et de la deuxième image IM2. L'étape d'affichage 360 est, par exemple, mise en œuvre par le dispositif d'affichage 18.

Avantageusement, les éléments E détectés sont mis en évidence par un symbole, classiquement un rectangle ou une ligne courbe fermée entourant au plus près l'élément E.

Avantageusement, sur demande de l'opérateur, les pixels correspondants à ou aux éléments E détectés sont mis en évidence sur l'image affichée, par exemple, par changement de couleur ou surbrillance. Cela permet à l'opérateur de vérifier que ce sont les pixels de l'élément E qui ont servi à la classification et non ceux du contexte.

En outre, la classification des éléments E est, par exemple, affichée sur l'image, ainsi qu'avantageusement la probabilité associée à la classification. Cela permet à l'opérateur de vérifier une classification associée à une probabilité non satisfaisante, typiquement inférieure à un seuil prédéterminé (par exemple inférieure à 80 %).

Eventuellement, l'étape d'affichage 360 comprend la mise à disposition de l'opérateur des contenus suivants :
- le modèle 3D de l'élément E notamment quand il s'agit d'un véhicule, avec possibilité de visualiser l'élément E sous différents angles, et/ou
- les autres classes (par exemple de deux à cinq) vers lesquelles l'outil de classification a convergé avec une probabilité plus faible, ainsi que la probabilité de classification associée à de telles classes et, éventuellement, le modèle 3D de l'élément E, et/ou
- le cas échéant, des images de l'élément E acquises dans d'autres bandes spectrales.

Le procédé comprend une étape 370 de mise à jour d'au moins l'une de la première et de la deuxième base de données et avantageusement d'entraînement du classifieur correspondant avec la base de données mise à jour. L'étape de mise à jour est effectuée en fonction de la ou des images et des classifications correspondantes mémorisées dans la mémoire du calculateur.

L'étape 370 est avantageusement mise en œuvre ultérieurement (hors mission) par un calculateur externe. En particulier, dans le contexte militaire, cette étape de mise à jour 370 est de préférence réalisée après la mission soit dans une base avancée, soit sur un site militaire arrière. Elle consiste à collecter l'ensemble ou au moins une partie des images classifiées par un dispositif 12 d'aide à la détection lors d'une mission ou d'un ensemble de missions, les classifications ayant été éventuellement corrigées par l'équipage.

Avantageusement, la au moins une base de données est mise à jour au moins lorsque la classification d'au moins l'un des éléments E détectés est différente pour la première image IM1 et la deuxième image IM2 ou lorsqu'un élément E a été détecté seulement pour l'une des deux images.

De préférence, pour chaque élément E détecté, lorsque la probabilité associée à la classification obtenue pour la première image IM1 (respectivement la deuxième image IM2) est supérieure ou égale à un seuil prédéterminé (par exemple 80%) et la probabilité associée à la classification obtenue pour la deuxième image IM2 (respectivement la première image IM1) est strictement inférieure au seuil prédéterminé, l'étape de mise à jour 370 comprend la mise à jour de la deuxième (respectivement la première) base de données par ajout de l'image de l'élément E détecté issue de la deuxième image IM2 (respectivement de la première image IM1), ainsi que de la classification obtenue pour l'élément E imagé sur la première image IM1 (respectivement de la deuxième image IM2). Avantageusement, la classification obtenue pour la première image IM1 (respectivement la deuxième image IM2) a été vérifiée au préalable par un opérateur. Le classifieur correspondant est ensuite entraîné sur la base de données mise à jour.

De préférence, pour chaque élément E détecté, lorsque la probabilité associée à la classification obtenue pour chacune de la première et de la deuxième image IM2 est inférieure à un seuil prédéterminé, l'étape de mise à jour 370 comprend la vérification, par un opérateur ou par un outil de classification additionnel, de la ou des classifications de l'élément E détecté. La vérification comprend, le cas échéant, la correction de la ou des classifications pour obtenir une ou des classification corrigées. Dans ce cas, l'étape de mise à jour 370 comprend avantageusement la mise à jour d'au moins une base de données par ajout de l'image de l'élément E détecté issue de l'image acquise dans la bande spectrale de la base de données, ainsi que de la classification vérifiée de l'élément E. Le classifieur correspondant est ensuite entraîné sur la base de données mise à jour.

L'étape de mise à jour 370 comprend donc une optimisation de chaque outil de classification utilisé lors des étapes de détection 310, 320 et de classification 330 par entraînement de l'outil avec la base de données correspondante mise à jour. Après cette optimisation, une nouvelle version de l'outil de classification pourra être déployée dans chaque plateforme 10, par exemple, en mémorisant la nouvelle version de l'outil dans une mémoire du calculateur 16 ou en mettant à jour le programme d'ordinateur utilisé.

En complément facultatif, chaque image acquise comprend une signature. La signature définit l'origine de l'image et garantit l'intégrité de l'image. L'étape de mise à jour 370 comprend alors la vérification de la signature de l'image et la non-prise en compte de l'image lorsque la signature de l'image n'est pas conforme à une signature prédéterminée. La vérification de la signature de l'image s'effectue, par exemple, par un algorithme de hachage. Eventuellement, il est aussi vérifié que le capteur ayant acquis l'image appartient bien à une liste de capteurs actifs et valides.

Les étapes 300 à 330 et 360 du procédé d'aide à la détection sont avantageusement effectuées en temps réel, ce qui permet d'aider un opérateur au cours d'une mission, par exemple de reconnaissance. Les étapes 340 de comparaison et 370 de mise à jour peuvent quant à elles être effectuées ultérieurement. En variante, les étapes 340 de comparaison et 370 de mise à jour sont également effectuées en temps réel, ce qui permet de mettre à jour la ou les bases de données concernées au cours de la mission et de tenir compte de la base de données mise à jour lors de cette mission.

L'homme du métier comprendra que l'ordre des étapes du procédé est donné à titre d'exemple et que les étapes peuvent être mises en œuvre dans un ordre différent. Par exemple, l'étape de mise à jour 370 peut avoir lieu en parallèle ou avant l'étape d'affichage 360.

Ainsi, outre les avantages exposés dans le premier mode de fonctionnement et qui s'appliquent également pour le deuxième mode de fonctionnement, le procédé selon le deuxième mode de fonctionnement permet d'enrichir les bases de données utilisées, ce qui permet d'améliorer la classification des éléments E détectés dans des bandes spectrales initialement moins fournies en données d'entrée. En particulier, dans le contexte militaire, les bases de données visibles étant généralement plus fournies que les bases de données infrarouge, l'acquisition d'éléments E connus en voie visible, mais « mal » reconnus ou nouveaux en voie infrarouge permet, par la double acquisition en voie visible et infrarouge, en retour de mission une labélisation automatique des menaces en voie infrarouge en s'appuyant sur les menaces reconnues en visible. L'avantage est ainsi de permettre la reconnaissance de nuit des menaces, quand les caméras visibles ne sont plus exploitables, la classification de ces menaces ayant été faite précédemment de jour.

Plus généralement, le procédé décrit utilise un même système d'acquisition 14 bi-spectral pour réaliser l'entrainement « surpervisé » d'un classifieur par un autre. Le classifieur bien entraîné (car bénéficiant de nombreuses images, d'un travail important ...) permettant d'améliorer avec le présent procédé et le système d'acquisition 14, un classifieur moins avancé (nombre d'images disponibles plus parcimonieux, peu de caméras disponibles dans la bande considérée). Le procédé décrit permet donc de résoudre un problème appelé dans le métier de l'Intelligence Artificielle par Deep Learning : « l'apprentissage frugal ».

Un tel procédé de détection permet donc une meilleure détection des éléments d'un environnement, et notamment des menaces dans un contexte militaire, et ce dans différentes bandes spectrales, en particulier de nuit.

Un troisième mode de fonctionnement du dispositif 12 va maintenant être décrit en référence à la mise en œuvre par le calculateur 16 d'un procédé d'aide à la détection d'éléments E dans un environnement. En outre, dans ce troisième mode de fonctionnement, le système d'acquisition 14 du dispositif 12 est conforme au troisième mode de réalisation décrit précédemment.

Dans ce troisième mode de fonctionnement, le procédé d'aide à la détection comprend toute combinaison des étapes du premier et du deuxième mode de fonctionnement lorsqu'une telle combinaison est possible.

Par exemple, en partant des étapes et des termes employés pour le procédé décrit dans le deuxième mode de fonctionnement, et en considérant que la première et la deuxième image IM2 sont des images panoramiques de l'environnement ayant une même première résolution et un même premier champ de vision, le procédé met également en œuvre les étapes suivantes.

Le procédé comprend, par exemple, une étape d'acquisition d'au moins une troisième image IM3 pour au moins l'un des éléments E détectés sur l'une de la première ou de la deuxième image IM2.

La troisième image IM3 correspond en fait à la deuxième image IM2 du premier mode de fonctionnement. La troisième image IM3 a donc une deuxième résolution et un deuxième champ de vision. La deuxième résolution est supérieure à la première résolution et le deuxième champ de vision est plus restreint que le premier champ de vision.

Le procédé comprend alors, par exemple, la réévaluation, pour chaque élément E détecté imagé sur la ou une troisième image IM3, de la classification de l'élément E en fonction de la troisième image IM3 et de la base de données d'images de même bande spectrale que la troisième image IM3.

En outre, avantageusement, pour chaque élément E détecté, lorsque la probabilité associée à la classification obtenue à partir de la troisième image IM3 est supérieure ou égale à un seuil prédéterminé (par exemple 80 %) et que la probabilité associée à la classification obtenue à partir de la première image IM1 (respectivement la deuxième image IM2) est strictement inférieure au seuil prédéterminé, l'étape de mémorisation 350 comprenant la mémorisation de ladite première (respectivement deuxième image), de la troisième image et des classifications correspondantes. L'étape de mise à jour 370 comprend la mise à jour de la première base de données (respectivement de la deuxième base de données) par ajout de l'image de l'élément E détecté issue de la première image IM1 (respectivement de la deuxième image IM2) et/ou de la troisième image IM3 lorsque cette dernière est dans la même bande spectrale que la première base de données (respectivement deuxième base de données), ainsi que de la classification de l'élément E obtenue à partir de la troisième image IM3. L'étape de mise à jour comprenant avantageusement l'entraînement du classifieur correspondant avec la base de données mise à jour.

L'homme du métier comprendra que les modes de réalisation ou de fonctionnement précédemment décrits peuvent être combinés pour former de nouveaux modes de réalisation ou de fonctionnement pourvu qu'ils soient compatibles techniquement.

Par exemple, de manière similaire au troisième mode de fonctionnement, les étapes décrites pour la troisième image pourraient être répétées pour une quatrième image dans une autre bande spectrale que celle de la troisième image.

En outre, l'homme du métier comprendra que les gammes de bandes spectrales sont données à titre d'exemple dans la description, et que l'invention s'applique pour toutes valeurs de bandes spectrales, étant entendu que la première et la deuxième bande sont distinctes. Ainsi, dans encore un autre exemple, au moins une bande spectrale appartient aux ultraviolets.

## Revendications

1. Procédé d'aide à la détection d'éléments (E) dans un environnement, le procédé comprenant les étapes de :
- acquisition simultanée d'une première image (IM1) et d'une deuxième image (IM2) imageant une même portion de l'environnement, la première image (IM1) étant une image dans une première bande spectrale, la deuxième image (IM2) étant une image dans une deuxième bande spectrale, la deuxième bande spectrale étant différente de la première bande spectrale,
- détection, le cas échéant, d'éléments (E) imagés dans la première image (IM1) par un premier classifieur entraîné en fonction d'une première base de données d'images d'éléments (E) dans la première bande spectrale,
- détection, le cas échéant, d'éléments (E) imagés dans la deuxième image (IM2) par un deuxième classifieur entraîné en fonction d'une deuxième base de données d'images d'éléments (E) dans la deuxième bande spectrale,
- classification, pour chaque image, des éléments (E) détectés par le classifieur correspondant,
- comparaison de la classification des éléments détectés (E) obtenue pour la première image (IM1) et pour la deuxième image (IM2), et
- lorsque la classification d'au moins l'un des éléments détectés (E) est différente pour la première image (IM1) et la deuxième image (IM2) ou lorsqu'un élément (E) a été détecté seulement pour l'une des deux images, mémorisation de la première et de la deuxième image et des classifications correspondantes pour une mise à jour ultérieure d'au moins l'une des bases de données, et un entraînement ultérieur du classifieur correspondant avec la base de données mise à jour.

2. Procédé selon la revendication 1, dans lequel l'une de la première bande spectrale et de la deuxième bande spectrale est comprise entre 380 nanomètres et 780 nanomètres et l'autre de la première bande spectrale et de la deuxième bande spectrale est comprise entre 780 nanomètres et 3 micromètres ou entre 3 micromètres et 5 micromètres ou entre 8 micromètres et 12 micromètres.

3. Procédé selon la revendication 1 ou 2, dans lequel le procédé comprend une étape de mise à jour d'au moins l'une des bases de données en fonction de la ou des images et des classifications correspondantes mémorisées.

4. Procédé selon la revendication 3, dans lequel chaque classification est associée à une probabilité représentative d'un niveau de confiance en la classification, pour chaque élément détecté (E), lorsque la probabilité associée à la classification obtenue pour la première image (IM1) est supérieure ou égale à un seuil prédéterminé et la probabilité associée à la classification obtenue pour la deuxième image (IM2) est strictement inférieure au seuil prédéterminé, l'étape de mise à jour comprenant la mise à jour de la deuxième base de données par ajout de l'image de l'élément détecté (E) issue de la deuxième image (IM2), ainsi que de la classification obtenue pour l'élément (E) imagé sur la première image (IM1) et l'entraînement du deuxième classifieur avec la deuxième base de données mise à jour.

5. Procédé selon la revendication 3 ou 4, dans lequel chaque classification est associée à une probabilité représentative d'un niveau de confiance en la classification, pour chaque élément détecté (E), lorsque la probabilité associée à la classification obtenue pour chacune de la première et de la deuxième image (IM1, IM2) est inférieure à un seuil prédéterminé, l'étape de mise à jour comprenant la vérification, par un opérateur ou par un outil de classification additionnel, de la ou des classifications de l'élément détecté (E) et, le cas échéant, la correction de la ou des classifications, l'étape de mise à jour comprenant la mise à jour d'au moins une base de données par ajout de l'image de l'élément détecté (E) issue de l'image acquise dans la bande spectrale de la base de données, ainsi que de la classification vérifiée de l'élément (E), et l'entraînement du classifieur correspondant avec la base de données mise à jour.

6. Procédé selon l'une quelconque des revendications 1 à 5, dans lequel la première et la deuxième image sont des images panoramiques de l'environnement ayant une même première résolution et un même premier champ de vision, le procédé comprenant, en outre, les étapes de :
- acquisition d'au moins une troisième image (IM3) pour au moins l'un des éléments détectés (E) sur l'une de la première ou de la deuxième image (IM1, IM2), la troisième image (IM3) étant une image dans la première ou la deuxième bande spectrale, la troisième image (IM3) ayant une deuxième résolution et un deuxième champ de vision, la deuxième résolution étant supérieure à la première résolution, le deuxième champ de vision étant plus restreint que le premier champ de vision,
- réévaluation, par le classifieur correspondant, pour chaque élément détecté (E) imagé sur la ou une troisième image (IM3), de la classification de l'élément (E) en fonction de la troisième image (IM3) pour obtenir une classification réévaluée de l'élément (E),
chaque classification étant associée à une probabilité représentative d'un niveau de confiance en la classification,
pour chaque élément détecté (E), lorsque la probabilité associée à la classification réévaluée est supérieure ou égale à un seuil prédéterminé et que la probabilité associée à la classification obtenue à partir de la première et/ou la deuxième image (IM1, IM2) est strictement inférieure au seuil prédéterminé, l'étape de mémorisation comprenant la mémorisation de ladite première et/ou deuxième image, de la troisième image et des classifications correspondantes pour une mise à jour ultérieure de la base de données dans la même bande spectrale que la troisième image (IM3), et l'entraînement du classifieur correspondant avec la base de données mise à jour.

7. Procédé selon l'une quelconque des revendications 1 à 6, dans lequel chaque image comprend une signature, l'étape de mise à jour comprenant la vérification de la signature de chaque image acquise et la non-prise en compte de l'image lorsque la signature de l'image n'est pas conforme à une signature prédéterminée.

8. Procédé selon l'une quelconque des revendications 1 à 7, dans lequel les éléments détectés (E) sont choisis dans la liste constituée de : un humain, un animal, un système d'arme, un véhicule terrestre, un véhicule maritime et un véhicule aérien.

9. Dispositif d'aide à la détection d'éléments (E) dans un environnement, le dispositif comprenant :
- un système d'acquisition d'images configuré pour mettre en œuvre l'étape d'acquisition du procédé selon l'une quelconque des revendications 1 à 8, et
- un calculateur (16) en interaction avec un premier classifieur entraîné en fonction d'une première base de données d'images d'éléments (E) et avec un deuxième classifieur entraîné en fonction d'une deuxième base de données d'images d'éléments (E), le calculateur (16) étant configuré pour mettre en œuvre les étapes de détection, de classification, de comparaison, et de mémorisation du procédé selon l'une quelconque des revendications 1 à 8.

10. Plateforme, notamment une plateforme mobile tel qu'un véhicule, comprenant un dispositif selon la revendication 9.

## Patentansprüche

1. Verfahren zur Unterstützung der Erfassung von Elementen (E) in einer Umgebung, das Verfahren umfassend die folgenden Schritte:
- gleichzeitiges Aufnehmen eines ersten Bilds (IM1) und eines zweiten Bilds (IM2), die denselben Abschnitt der Umgebung abbilden, wobei das erste Bild (IM1) ein Bild in einem ersten Spektralband ist, das zweite Bild (IM2) ein Bild in einem zweiten Spektralband ist, wobei das zweite Spektralband von dem ersten Spektralband verschieden ist,
- gegebenenfalls Erfassen von Elementen (E), die in dem ersten Bild (IM1) abgebildet sind, durch einen ersten Klassifizierer, der basierend auf einer ersten Datenbank mit Bildern von Elementen (E) in dem ersten Spektralband trainiert ist,
- gegebenenfalls Erfassen von Elementen (E), die in dem zweiten Bild (IM2) abgebildet sind, durch einen zweiten Klassifizierer, der basierend auf einer zweiten Datenbank mit Bildern von Elementen (E) in dem zweiten Spektralband trainiert ist,
- Klassifizieren, für jedes Bild, der Elemente (E), die von dem entsprechenden Klassifizierer erfasst werden,
- Vergleichen der Klassifizierung der erfassten Elemente (E), die für das erste Bild (IM1) und für das zweite Bild (IM2) erlangt wird, und
- wenn die Klassifizierung von mindestens einem der erfassten Elemente (E) für das erste Bild (IM1) und das zweite Bild (IM2) verschieden ist oder wenn ein Element (E) nur für eines der zwei Bilder erfasst wurde, Speichern des ersten und des zweiten Bilds und der entsprechenden Klassifizierungen für eine spätere Aktualisierung von mindestens einer der Datenbanken und späteres Trainieren des entsprechenden Klassifizierers mit der aktualisierten Datenbank.

2. Verfahren nach Anspruch 1, wobei eines der ersten Spektralbandes und des zweiten Spektralbandes zwischen 380 Nanometer und 780 Nanometer liegt und das andere der ersten Spektralbandes und des zweiten Spektralbandes zwischen 780 Nanometer und 3 Mikrometer oder zwischen 3 Mikrometer und 5 Mikrometer oder zwischen 8 Mikrometer und 12 Mikrometer liegt.

3. Verfahren nach Anspruch 1 oder 2, wobei das Verfahren einen Schritt umfasst, in dem mindestens eine der Datenbanken basierend auf die oder den gespeicherten Bildern und den entsprechenden Klassifizierungen aktualisiert wird.

4. Verfahren nach Anspruch 3, wobei jede Klassifizierung mit einer Wahrscheinlichkeit assoziiert ist, die repräsentativ für ein Konfidenzniveau bei die Klassifizierung ist, für jedes erfasste Element (E), wenn die Wahrscheinlichkeit, die mit der für das erste Bild (IM1) erlangten Klassifizierung assoziiert ist, größer als oder gleich wie ein vorbestimmter Schwellenwert ist und die Wahrscheinlichkeit, die mit der für das zweite Bild (IM2) erhaltenen Klassifizierung verbunden ist, strikt unter dem vorbestimmten Schwellenwert ist, der Aktualisierungsschritt umfassend das Aktualisieren der zweiten Datenbank durch Hinzufügen des Bilds des erfassten Elements (E) aus dem zweiten Bild (IM2) sowie der für das auf dem ersten Bild (IM1) abgebildete Element (E) erlangten Klassifizierung und das Trainieren des zweiten Klassifizierers mit der aktualisierten zweiten Datenbank.

5. Verfahren nach Anspruch 3 oder 4, wobei jede Klassifizierung mit einer Wahrscheinlichkeit assoziiert ist, die repräsentativ für ein Konfidenzniveau bei der Klassifizierung ist, wenn für jedes erfasste Element (E) die Wahrscheinlichkeit, die mit der Klassifizierung assoziiert ist, die für jedes von dem ersten und dem zweiten Bild (IM1, IM2) erlangt wird, unter einem vorbestimmten Schwellenwert ist, der Aktualisierungsschritt das Überprüfen, durch einen Bediener oder ein zusätzliches Klassifizierungswerkzeug, der Klassifizierung(en) des erfassten Elements (E) und gegebenenfalls das Korrigieren der Klassifizierung(en) umfasst, der Aktualisierungsschritt umfassend die Aktualisierung mindestens einer Datenbank durch Hinzufügen des Bilds des erfassten Elements (E) aus dem in dem Spektralbereich der Datenbank aufgenommenen Bild sowie der überprüften Klassifizierung des Elements (E) und das Trainieren des entsprechenden Klassifizierers mit der aktualisierten Datenbank.

6. Verfahren nach einem der Ansprüche 1 bis 5, wobei das erste und das zweite Bild Panoramabilder der Umgebung mit derselben ersten Auflösung und demselben ersten Sichtfeld sind, das Verfahren ferner umfassend die folgenden Schritte:
- Erfassen von mindestens einem dritten Bild (IM3) für mindestens eines der auf einem der ersten oder zweiten Bilder (IM1, IM2) erfassten Elemente (E), wobei das dritte Bild (IM3) ein Bild in dem ersten oder zweiten Spektralband ist, wobei das dritte Bild (IM3) eine zweite Auflösung und ein zweites Sichtfeld aufweist, wobei die zweite Auflösung höher ist als die erste Auflösung und das zweite Sichtfeld enger ist als das erste Sichtfeld,
- Neubewerten, durch den entsprechenden Klassifizierer, für jedes erfasste Element (E), das auf dem oder einem dritten Bild (IM3) abgebildet ist, der Klassifizierung des Elements (E) basierend auf dem dritten Bild (IM3), um eine neu bewertete Klassifizierung des Elements (E) zu erlangen,
wobei jede Klassifizierung mit einer Wahrscheinlichkeit assoziiert ist, die repräsentativ für ein Konfidenzniveau bei der Klassifizierung ist,
wenn für jedes erfasste Element (E) die mit der neu bewerteten Klassifizierung assoziierte Wahrscheinlichkeit größer als oder gleich wie ein vorbestimmten Schwellenwert ist und die mit der aus dem ersten und/oder zweiten Bild (IM1, IM2) erlangten Klassifizierung assoziierte Wahrscheinlichkeit strikt unter dem vorbestimmten Schwellenwert ist, der Speicherschritt das Speichern des ersten und/oder zweiten Bilds, des dritten Bilds und der entsprechenden Klassifizierungen für eine spätere Aktualisierung der Datenbank in demselben Spektralband wie das dritte Bild (IM3) und das Trainieren des entsprechenden Klassifizierers mit der aktualisierten Datenbank umfasst.

7. Verfahren nach einem der Ansprüche 1 bis 6, wobei jedes Bild eine Signatur umfasst, der Aktualisierungsschritt umfassend das Überprüfen der Signatur von jedem erfassten Bild und das Nichtberücksichtigen des Bilds, wenn die Signatur des Bilds nicht mit einer vorbestimmten Signatur übereinstimmt.

8. Verfahren nach einem der Ansprüche 1 bis 7, wobei die erfassten Elemente (E) ausgewählt sind aus der Liste, bestehend aus: einem Menschen, einem Tier, einem Waffensystem, einem Landfahrzeug, einem Wasserfahrzeug und einem Luftfahrzeug.

9. Vorrichtung zur Unterstützung der Erfassung von Elementen (E) in einer Umgebung, die Vorrichtung umfassend:
- ein Bildaufnahmesystem, das konfiguriert ist, um den Aufnahmeschritt des Verfahrens nach einem der Ansprüche 1 bis 8 zu implementieren, und
- einen Rechner (16), der mit einem ersten Klassifizierer, der abhängig von einer ersten Datenbank von Elementbildern (E) trainiert wird, und mit einem zweiten Klassifizierer, der abhängig von einer zweiten Datenbank von Elementbildern (E) trainiert wird, interagiert, wobei der Rechner (16) konfiguriert ist, um die Schritte eines Erfassens, Klassifizierens, Vergleichens und Speicherns des Verfahrens nach einem der Ansprüche 1 bis 8 zu implementieren.

10. Plattform, insbesondere eine mobile Plattform, wie beispielsweise ein Fahrzeug, umfassend eine Vorrichtung nach Anspruch 9.

## Claims

1. A method for assisting in the detection of elements (E) in an environment, the method comprising the steps of:
- simultaneously acquiring a first image (IM1) and a second image (IM2) imaging the same portion of the environment, the first image (IM1) being an image in a first spectral band, the second image (IM2) being an image in a second spectral band, the second spectral band being different from the first spectral band,
- detecting, if appropriate, any imaged elements (E) in the first image (IM1) by a first classifier trained on a first database of images of elements (E) in the first spectral band,
- detecting, if appropriate, any imaged elements (E) in the second image (IM2) by a first second trained on a second database of images of elements (E) in the second spectral band,
- classifying, for each image, the elements (E) detected by the corresponding classifier,
- comparing the classification of detected elements (E) obtained for the first image (IM1) and for the second image (IM2), and
- when the classification of at least one of the detected elements (E) is different for the first image (IM1) and the second image (IM2), or when an element (E) has been detected only for one of the two images, storing the first and second image and the corresponding classifications for a subsequent update of at least one of the databases, and subsequently training the corresponding classifier with the updated database.

2. The method according to claim 1, wherein one of the first spectral band and the second spectral band is comprised between 380 nanometres and 780 nanometres and the other of the first spectral band and the second spectral band is comprised between 780 nanometres and 3 micrometres or between 3 micrometres and 5 micrometres or between 8 micrometres and 12 micrometres.

3. The method according to claim 1 or 2, wherein the method comprises a step of updating at least one of the databases according to the stored image(s) and corresponding classifications.

4. The method according to claim 3, wherein each classification is associated with a probability representative of a confidence level in the classification, for each detected element (E), when the probability associated with the classification obtained for the first image (IM1) is greater than or equal to a predetermined threshold and the probability associated with the classification obtained for the second image (IM2) is strictly less than the predetermined threshold, the updating step comprising updating the second database by adding the image of the detected element (E) from the second image (IM2), as well as the classification obtained for the element (E) imaged in the first image (IM1) and training the second classifier with the updated second database,

5. The method according to claim 3 or 4, wherein each classification is associated with a probability representative of a confidence level in the classification, for each detected element (E), when the probability associated with the classification obtained for each of the first and second images (IM1, IM2) is less than a predetermined threshold, the updating step comprising the verification, by an operator or by an additional classification tool, of the classification(s) of the detected element (E) and, if necessary, the correction of the classification(s), the updating step comprising the updating of at least one database by adding the image of the detected element (E) from the image acquired in the spectral band of the database, together with the verified classification of the element (E), and training the corresponding classifier with the updated database.

6. The method according to any one of the claims 1 to 5, wherein the first and second images are panoramic images of the environment having the same first resolution and field of view, the method further comprising the steps of:
- acquiring at least a third image (IM3) for at least one of the elements (E) detected in one of the first or second images (IM1, IM2), the third image (IM3) being an image in the first or second spectral band, the third image (IM3) having a second resolution and a second field of view, the second resolution being higher than the first resolution, the second field of view being smaller than the first field of view,
- re-evaluating, by the corresponding classifier, for each detected element (E) imaged in the or a third image (IM3), the classification of the element (E) in terms of the third image (IM3) to obtain a re-evaluated classification of the element (E),
each classification being associated with a probability representative of a level of confidence in the classification,
for each detected element (E), when the probability associated with the re-evaluated classification is greater than or equal to a predetermined threshold and the probability associated with the classification obtained from the first and/or second image (IM1, IM2) is strictly less than the predetermined threshold, the storing step comprising storing said first and/or second image, the third image and the corresponding classifications for subsequent updating of the database in the same spectral band as the third image (IM3), and training the corresponding classifier with the updated database.

7. The method according to any one of claims 1 to 6, wherein each image comprises a signature, the updating step comprising checking the signature of each image acquired and disregarding the image when the signature of the image does not conform to a predetermined signature.

8. The method according to any one of claims 1 to 7, wherein the detected elements (E) are selected from the list consisting of: a human, an animal, a weapon system, a land vehicle, a water vehicle and an air vehicle.

9. A device for assisting in the detection of elements (E) in an environment, the device comprising:
- an image acquisition system configured to implement the acquiring step of the method according to any one of claims 1 to 8, and
- a computer (16) interacting with a first classifier trained on a first database of element (E) images and with a second classifier trained on a second database of element (E) images, the computer (16) being configured to implement the detecting, classifying, comparing, and storing steps of the method according to any one of claims 1 to 8.

10. A platform, in particular a mobile platform such as a vehicle, comprising a device according to claim 9.
